# EUROPÄISCHE PATENTSCHRIFT

(11) **EP 1 752 333 B1**
(45) Veröffentlichungstag und Bekanntmachung des Hinweises auf die Patenterteilung: **28.10.2009**
(21) Anmeldenummer: 06015314.5
(22) Anmeldetag: 24.07.2006
(51) Int. Cl.: B60N 2/46, B60N 3/10

(54) **Fahrzeugkonsole mit einem längsverschieblichen Getränkehalter**
Vehicle console with a longitudinally slidable beverage holder
Console de véhicule avec une porte-boisson coulissants en longueur

(30) Priorität: 12.08.2005 DE 102005038566
(43) Veröffentlichungstag der Anmeldung: 14.02.2007
(73) Patentinhaber: Johnson Controls Interiors GmbH & Co. KG, 47929 Grefrath (DE)
(72) Erfinder: Vincent, John, 50674 Köln (DE); Zimmermann, Jochen, 42399 Wuppertal (DE); Bennion, Bill, Shoreham by Sea BN43 5LW (GB); Rebhan, Udo, 96358 Reichenbach (DE)
(74) Vertreter: Brosch, Oliver

(56) Entgegenhaltungen:
- WO-A-2005/024508
- US-A1- 2003 127 877
- US-A1- 2005 189 776

## Beschreibung

Die vorliegende Erfindung betrifft eine Fahrzeugkonsole mit einem sich in Längsrichtung der Fahrzeugkonsole erstreckenden beidseitig vorgesehenen oberen Randbereich, wobei ein Getränkehalter im oberen Randbereich beidseitig fixiert in Längsrichtung der Fahrzeugkonsole verschieblich angeordnet ist.

Aus der Druckschrift DE 195 29 876 A1 ist ein Aufsatzteil für eine Mittelkonsole eines Kraftfahrzeuges bekannt, wobei das Aufsatzteil auf den gewünschten Einsatzzweck abzustimmen ist. Das Aufsatzteil besteht hier aus einem offenen Rahmenteil sowie aus mehreren in das Rahmenteil einsetzbaren und an diesen gehaltenen Mitteln zur Halterung von Gegenständen, wobei die Anordnung der Mittel im Rahmenteil innerhalb des von der Rahmenöffnung umgrenzten Bereiches wählbar ist. Die in den Rahmen einzusetzenden Einsätze sind zwar variabel anordnungsfähig vorgesehen, jedoch sind sie nicht zum Verschieben je nach gewünschtem Verwendungszweck der Mittelkonsole vorgesehen, sondern eine unterschiedliche Anordnung der Halterungen erfordert ein Entnehmen zumindest eines Teils der Halterung mit anschließendem erneuten Verrasten der Halterungen in dem Rahmenteil. Insbesondere für den Fall von Getränkehaltern geht so ein zum Teil erheblicher Stauraum unterhalb des fest vorgesehenen Getränkehalters verloren.

Ein gattungsgemäßer Getränkehalter ist aus der WO-A-2004/024508 bekannt.

Der Erfindung liegt daher die Aufgabe zugrunde, eine Fahrzeugkonsole mit einem längsverschieblichen Getränkehalter zu schaffen, bei der die Nachteile des Standes der Technik vermieden werden und wobei eine sehr flexible Anordnung des Getränkehalters bei gleichzeitig optisch ansprechender Gestaltung der gesamten Anordnung aus Konsole und Getränkehalter sowie kostengünstiger Herstellbarkeit sowie Montage gegeben ist.

Diese Aufgabe wird erfindungsgemäß durch das Kennzeichen des Anspruch 1 gelöst. Es ist hierdurch möglich, auch den Stauraum bzw. Platz unterhalt der Getränkehalterung zu nutzen, so dass zwar nicht in jedem Moment der gesamte Stauraum der Konsole komplett zugänglich ist, jedoch in jedem Fall alle Stauraumabschnitte der Fahrzeugkonsole zur Verstauung von Gegenständen für einen Benutzer des Fahrzeugs nutzbar sind und im Prinzip auch jederzeit zugänglich sind. Erfindungsgemäß ist besonders vorteilhaft, dass der Getränkehalter lediglich im oberen Randbereich der Fahrzeugkonsole angeordnet ist und im wesentlichen nicht in den unteren Stauraumbereich der Fahrzeugkonsole hineinragt, so dass unterhalb des Getränkehalters ein erhebliches Stauraumvolumen vorhanden ist, welches für einen Benutzer nutzbar ist und welches durch einfaches Verschieben des Getränkehalters auch zugänglich ist.

Bevorzugt ist erfindungsgemäß, dass der Getränkehalter fest mit dem oberen Randbereich der Fahrzeugkonsole verbunden vorgesehen ist. Hierdurch ist es zwar nicht möglich, dass der Getränkehalter ohne komplexe Montagearbeiten ausgebaut werden kann, was in gewissem Sinn die Flexibilität der erfindungsgemäßen Fahrzeugkonsole einschränkt, jedoch ist es erfindungsgemäß besonders vorteilhaft, wenn durch die mit mindestens einigem Montageaufwand verbundene Ausbaubarkeit des Getränkehalters gewährleistet ist, dass dieser nicht verloren geht oder unbeabsichtigt von dem Fahrzeug getrennt wird. Eine Ausbaubarkeit des Getränkehalters ist darüber hinaus bei der erfindungsgemäßen Fahrzeugkonsole nicht erforderlich, weil der Getränkehalter im wesentlichen vollständig in eine solche Position gebracht werden kann, dass er die Nutzung des darunter liegenden Stauraums nicht beeinträchtigt bzw. den Zugang zu diesem Stauraum nicht beeinträchtigt.

Erfindungsgemäß ist der Getränkehalter mittels eines Führungsmittels, insbesondere einer Führungsschiene, im oberen Randbereich längsbeweglich angeordnet ist. Hierdurch ist eine besonders stabile und einfache Verschieblichkeit des Getränkehalters erfindungsgemäß möglich. Einerseits muss der Getränkehalter vergleichsweise leicht verschieblich angeordnet sein, andererseits darf der Getränkehalter nicht zu leicht verschieblich sein, weil sonst bei jedem Brems- oder Beschleunigungsvorgang des Fahrzeugs eine Positionsänderung des Getränkehalters hervorgerufen werden würde. Gegebenenfalls kann es erfindungsgemäß auch vorteilhaft vorgesehen sein, dass der Getränkehalter mit einem Fixierungsmittel oder Rastmittel in seiner eingestellten Längsposition fixiert vorgesehen ist und die eingestellte Längsposition des Getränkehalters zunächst von einem Benutzer entriegelt werden muss oder aber ein Widerstand durch Kraftaufwand des Benutzers bei der Verschiebung des Getränkehalters überwunden werden muss bevor eine Längsverschiebung des Getränkehalters erfolgt.

Erfindungsgemäß ist ferner bevorzugt, dass der Getränkehalter eine Halterung aufweist, wobei die Halterung aus der Ebene des oberen Randbereichs nach oben hin ausstellbar vorgesehen ist. Die Halterung weist erfindungsgemäß insbesondere zwei Ausnehmungen auf, welche die Becher bzw. Flaschen der mittels des Getränkehalters zu haltenden Getränke abstützen. Hierzu ist die Halterung ausgehend von der Ebene des Getränkehalters im Bereich des oberen Randbereichs der Fahrzeugskonsole nach oben hin ausstellbar, so dass Becher oder Flaschen sicher gehalten werden können. Die Halterung kann erfindungsgemäß weitere Elemente bzw. derart flexibel vorgesehen sein, dass verschiedene Durchmesser von Getränkebehältnissen, insbesondere Becher, Flaschen, Joghurtbecher o. dgl., sicher mittels des Getränkehalters gehalten werden können. Hierzu ist es erfindungsgemäß möglich, dass die Halterung entweder zwei Getränkebehältnisse eines vorgegebenen Durchmessers aufnehmen kann oder aber dass die Getränkehalterung lediglich ein großes Getränkebehältnis aufnehmen kann bzw. eine Vielzahl von kleineren Getränkebehältnissen aufnehmen kann. Erfindungsgemäß ist besonders bevorzugt, dass die Halterung mittels eines Drückmechanismus, ähnlich dem Mechanismus in einem Kugelschreiber, von ihrer nach oben hin ausgerückten Position in die nach unten hin eingestellte Normalposition und umgekehrt einstellbar ist.

Bevorzugt ist erfindungsgemäß ferner, dass die Fahrzeugkonsole zur Anordnung zwischen Vordersitzen eines Fahrzeugs vorgesehen ist und dass der Getränkehalter in seiner in Längsrichtung der Fahrzeugkonsole hintersten Position auch von auf hinter den Vordersitzen des Fahrzeugs sitzenden Insassen erreichbar ist. Dies hat den Vorteil, dass mittels des erfindungsgemäßen Getränkehalters bzw. der erfindungsgemäßen Fahrzeugkonsole nicht nur ein Mehrwert hinsichtlich des Stauraums für die Insassen von Vordersitzen geschaffen wird, sondern dass auch ein Mehrwert für auf hinter den Vordersitzen sitzenden Insassen erzielt werden kann.

Erfindungsgemäß ist femer bevorzugt, dass die Fahrzeugkonsole eine Fahrzeugmittelkonsole ist. Eine Fahrzeugmittelkonsole ist insbesondere zwischen den Vordersitzen eines Fahrzeugs vorgesehen, was den Vorteil hat, dass der dort angesiedelte Stauraum besonders leicht und einfach sowie komfortabel von Insassen der Vordersitze bedienbar ist.

Erfindungsgemäß ist in dem Führungsmittel eine Abdeckung des Stauraumabschnitts längsverschieblich vorgesehen ist. Dadurch kann ein besonders guter Schutz von Gegenständen erzielt werden, die in dem Stauraum aufbewahrt werden. Außerdem ist es dadurch erfindungsgemäß möglich, die Sicherheit - etwa gegen Einbruchsversuche in das Fahrzeug - dadurch zu erhöhen, dass ein in dem Stauraum aufbewahrter Gegenstand nicht für einen potentiellen Einbrecher nicht sichtbar ist.

Erfindungsgemäß ist ferner bevorzugt, dass die Fahrzeugkonsole eine Armlehnenvorrichtung in Längsrichtung im hinteren Bereich der Fahrzeugkonsole aufweist. Hierdurch ist es erfindungsgemäß besonders einfach und komfortabel möglich, dass der Getränkehalter unter die Armlehnenvorrichtung verschoben wird und somit der gesamte Stauraum der Fahrzeugkonsole neben und unter dem Getränkehalter für einen Insassen der Fahrzeugvordersitze zugänglich wird.

Ferner ist bevorzugt, dass die Armlehnenvorrichtung in einer ersten Position als Armlehne für die Vordersitze des Fahrzeugs verwendbar vorgesehen ist und wobei die Armlehnenvoffichtung in einer zweiten Position als Komforteinrichtung, insbesondere als Tisch, für die auf hinter den Vordersitzen des Fahrzeugs sitzenden Insassen verwendbar vorgesehen ist. Hierdurch wird eine weitere Flexibilisierung bei der Nutzung der erfindungsgemäßen Fahrzeugkonsole erreicht, wobei bei einer Einstellung der Armlehnenvorrichtung als Tisch für die hinter den Vordersitzen sitzenden Insassen in besonders vorteilhafter Weise die Benutzung des Getränkehalters möglich ist.

Die Erfindung wird nachfolgend anhand von in der Zeichnung dargestellten Ausführungsbeispielen näher erläutert.
- **Figur 1**: zeigt eine perspektivische Darstellung einer Fahrzeugkonsole in Form einer Fahrzeugmittelkonsole mit einem Getränkehalter,
- **Figur 2**: zeigt eine detaillierte Darstellung des Getränkehalters,
- **Figur 3**: zeigt eine Schnittdarstellung durch die Fahrzeugkonsole mit dem Getränkehalter,
- **Figur 4**: zeigt eine Querschnittdarstellung entlang einer Schnittlinie AA aus der Figur 3,
- **Figur 5**: zeigt eine Prinzipdarstellung einer typischen Sitzanordnung in einem Fahrzeug und
- **Figuren 6 bis 8**: zeigen weitere perspektivische Darstellungen der Fahrzeugkonsole in Form einer Fahrzeugmittelkonsole mit einem Getränkehalter.

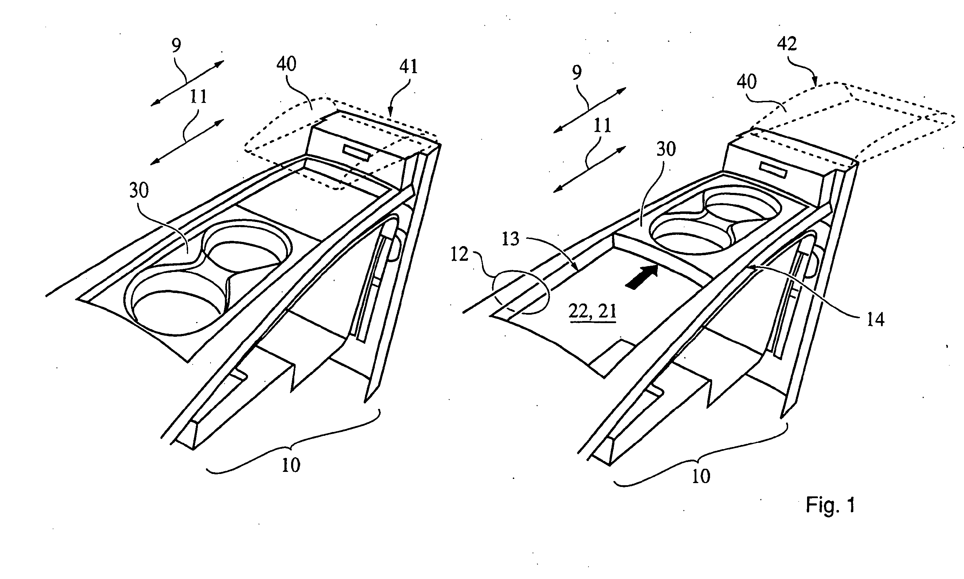

In **Figur 1** ist schematisch in perspektivischer Darstellung eine Fahrzeugkonsole 10 dargestellt, welche einen Getränkehalter 30 aufweist. Der Getränkehalter 30 ist in einer Längsrichtung 11 der Fahrzeugkonsole 10 längsverschieblich vorgesehen. Hierzu ist in **Figur 1** im linken Teil der Figur eine erste Abbildung der Fahrzeugkonsole 10 dargestellt, wobei der Getränkehalter 30 nach vorne hin (d.h. in der perspektivischen Darstellung im linken Teil der Fahrzeugkonsole) eingestellt ist. Weiterhin umfasst die **Figur 1** im rechten Teil der Figur eine weitere perspektivische Darstellung der Fahrzeugkonsole 10, in welcher der Getränkehalter 30 nach hinten hin (d.h. in der perspektivischen Darstellung im rechten Teil der Fahrzeugkonsole) eingestellt ist. Erfindungsgemäß ist es insbesondere vorgesehen, dass die Längsrichtung 11 im wesentlichen in einer Fahrzeuglängsrichtung 9 verläuft, so dass die Einstellung des Getränkehalters 30 im linken Teil der **Figur 1** beispielsweise einer vorderen Einstellung des Getränkehalters 30 in Fahrzeuglängsrichtung 9 entspricht und wobei die Anordnung des Getränkehalters 30 im rechten Teil der **Figur 1** einer hinteren Einstellung des Getränkehalters 30 in Fahrzeugslängsrichtung 9 entspricht.

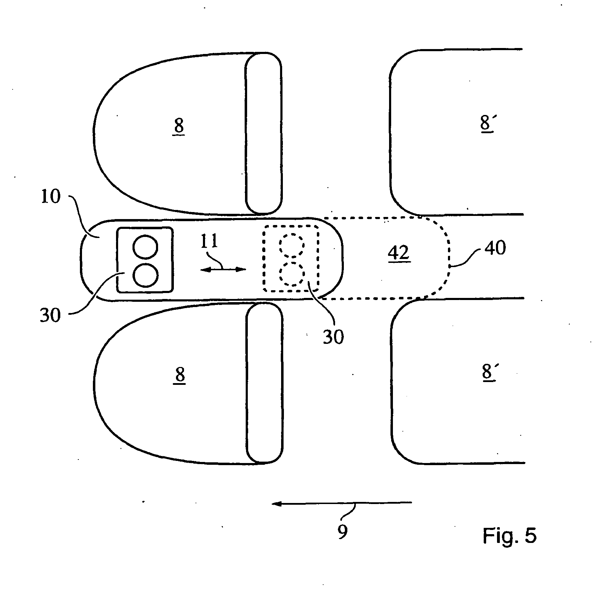

In einer alternativen Ausführungsform der Fahrzeugkonsole 10 weist diese eine Armlehnenvorrichtung 40 (in Figur 1 lediglich mit gestrichelter Linie angedeutet) auf, welche in eine erste Position 41 (vgl. den linken Teil der **Figur 1**) einstellbar ist und welche darüber hinaus in eine zweite Position 42 einstellbar ist (vgl. rechter Teil der **Figur 1****).** Die Armlehnenvorrichtung 40 ist erfindungsgemäß insbesondere in Fahrzeugrichtung 9 im hinteren Teil der Fahrzeugkonsole 10 angeordnet, so dass die Einstellung des Getränkehalters 30 im linken Teil der **Figur 1** in seiner vorderen Position (in Fahrzeuglängsrichtung 9) eingestellt ist, so dass der Getränkehalter im rechten Teil der **Figur 1** in seine hintere Position eingestellt ist. In der ersten Position 41 der Armlehnenvorrichtung 40 ist die Armlehnenvorrichtung 40 insbesondere als Armlehne für die auf Vordersitzen (vgl. Figur 5) des Fahrzeugs sitzenden Insassen benutzbar, während in der zweiten Position 42 der Armlehnenvorrichtung 40 eine Benutzung als Komforteinrichtung, beispielsweise als Tisch, für die hinter den Vordersitzen des Fahrzeugs sitzenden Insassen Verwendung finden kann.

Der Getränkehalter 30 ist erfindungsgemäß in einem oberen Randbereich 12 der Fahrzeugkonsole 10 auf beiden Seiten 13, 14 der Fahrzeugkonsole (beide Seiten 13, 14 erstrecken sich in Längsrichtung 11 der Fahrzeugkonsole 10) angeordnet. Die Fahrzeugkonsole 10 weist unterhalb und neben dem Getränkehalter 30 jeweils Stauraumabschnitte 21, 22 auf. Durch die Verschieblichkeit des Getränkehalters 30 ist mit erfindungsgemäß sehr einfachen Mitteln sowohl der komplette Stauraumabschnitt der Fahrzeugkonsole 10 für einen Benutzer nutzbar im Sinne einer Ablagemöglichkeit von Gegenständen und es ist weiterhin erfindungsgemäß auch im wesentlichen jeder Stauraumabschnitt 21, 22 für einen Benutzer zugänglich, wobei für eine solche Zugänglichkeit lediglich der Getränkehalter 30 verschoben werden muss.

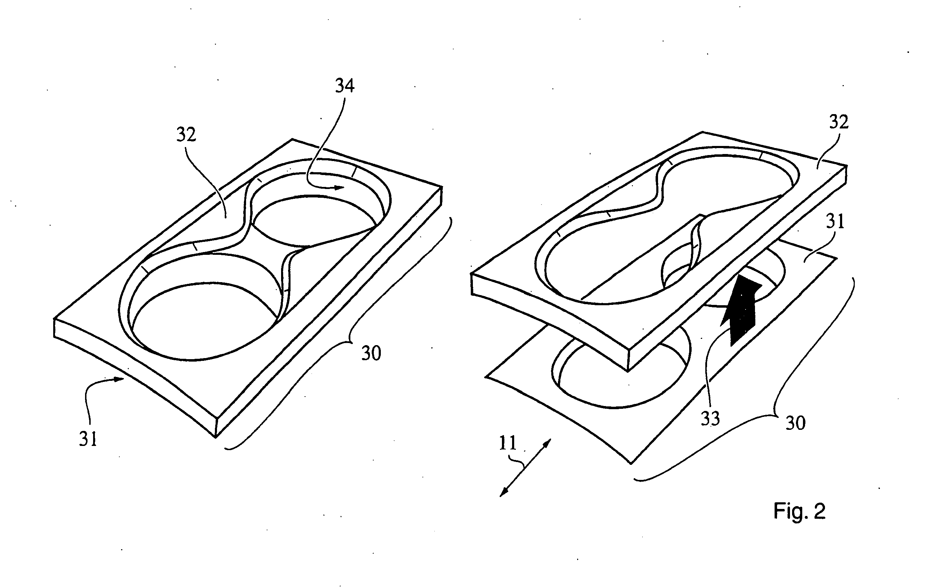

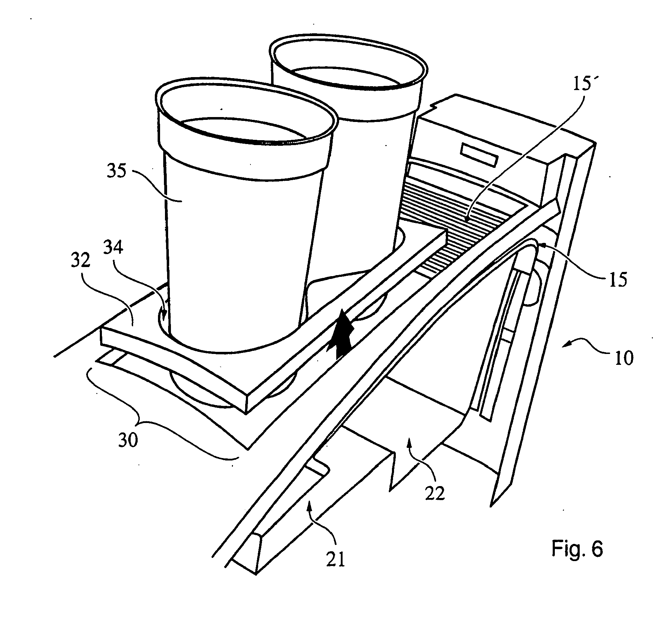

In **Figur 2** in detaillierterer Darstellung des Getränkehalters 30 dargestellt, wobei der Getränkehalter in einer dritten Position (linker Teil der **Figur 2**) und in einer vierten Position (rechter Teil der **Figur 2**) einstellbar ist. Die dritte Position des Getränkehalters 30 wird im folgenden auch als eingefahrene Position des Getränkehalters 30 bezeichnet, wobei eine Halterung 32 im wesentlichen dicht oberhalb eines Bodenabschnitts 31 des Getränkehalters 30 angeordnet ist. Die Halterung 32 weist erfindungsgemäß beispielsweise Ausnehmungen 34 zur Aufnahme von Getränkebehältnissen (in **Figur 2** nicht dargestellt, vgl. **Figur 6**) auf, beispielsweise Becher, Flaschen oder dergleichen. Zur Einstellung der vierten Position des Getränkehalters 30, welche im folgenden auch als ausgefahrene Position des Getränkehaltes 30 bezeichnet wird, wird die Halterung 32 in eine Richtung 33 von dem Bodenabschnitt 31 des Getränkehalters 30 nach oben bewegt. Hierzu wird beispielsweise die Halterung 32 von einem Benutzer etwas nach unten gedrückt, so dass im wesentlichen entsprechend eines Mechanismus bei der Einstellung der Mine eines Kugelschreibers der Getränkehalter 30 die ausgefahrene Position einnimmt. Hierbei bleibt der Getränkehalter 30 nach wie vor in Längsrichtung 11 der Fahrzeugkonsole 10 verschieblich.

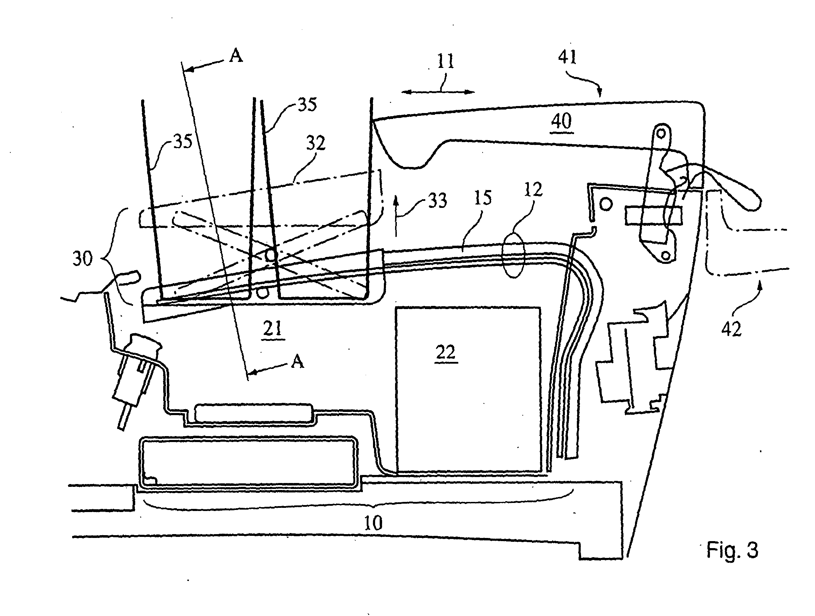

In **Figur 3** ist eine Schnittdarstellung in Längsrichtung 11 der Fahrzeugkonsole dargestellt. Die Konsole 10 weist in ihrem oberen Randbereich 12 ein Führungsmittel 15, insbesondere eine Führungsschiene, auf, entlang welcher der Getränkehalter 30 längsverschieblich vorgesehen ist. Angedeutet ist in **Figur 3** die Armlehnenvorrichtung 40, wobei in durchgezogener Linie die erste Position 41 der Armlehnenvorrichtung 40 dargestellt ist und wobei in gestrichelter Linie die zweite Position 42 der Armiehnenvorrichtung 40 dargestellt ist. Ebenso ist die eingefahrene und ausgefahrene Position des Getränkehalters 30 in **Figur 3** angedeutet, wobei die ausgefahrene Position der Halterung 32 in gestrichelter Linie dargestellt ist. In Figur 3 ist besonders deutlich erkennbar, ein erster Stauraumabschnitt 21 im vorderen Bereich der Fahrzeugkonsole 10 und ein zweiter Stauraumabschnitt 22 im hinteren Bereich der Fahrzeugkonsole 10 erkennbar. Erkennbar ist weiterhin, dass der Getränkehalter 30 im wesentlichen sowohl den ersten Stauraumabschnitt 21 (bei Einstellung des Getränkehalters 30 in den vorderen Bereich der Fahrzeugkonsole 10) bzw. den zweiten Stauraumabschnitt 22 (bei Einstellung des Getränkehalters 30 in den hinteren Bereich der Fahrzeugkonsole 10) lediglich abdeckt, jedoch im wesentlichen keinen Stauraum selbst belegt. Dadurch ist es möglich, dass ein Benutzer sämtliche Stauraumabschnitte 21, 22 der Fahrzeugkonsole 10 trotz des Vorhandenseins des Getränkehalters 30 nutzen kann und dass, um einen Zugang zu einem Stauraumabschnitt 21, 22 zu erhalten, der Getränkehalter 30 gegebenenfalls lediglich weggeschoben werden muss. Durch die besonders schlanke bzw. niedrige Bauhöhe des Getränkehalters 30 in seiner eingefahrenen Position ist es erfindungsgemäß möglich, dass die erfindungsgemäße Fahrzeugkonsole besonders ästhetisch gestaltet ist.

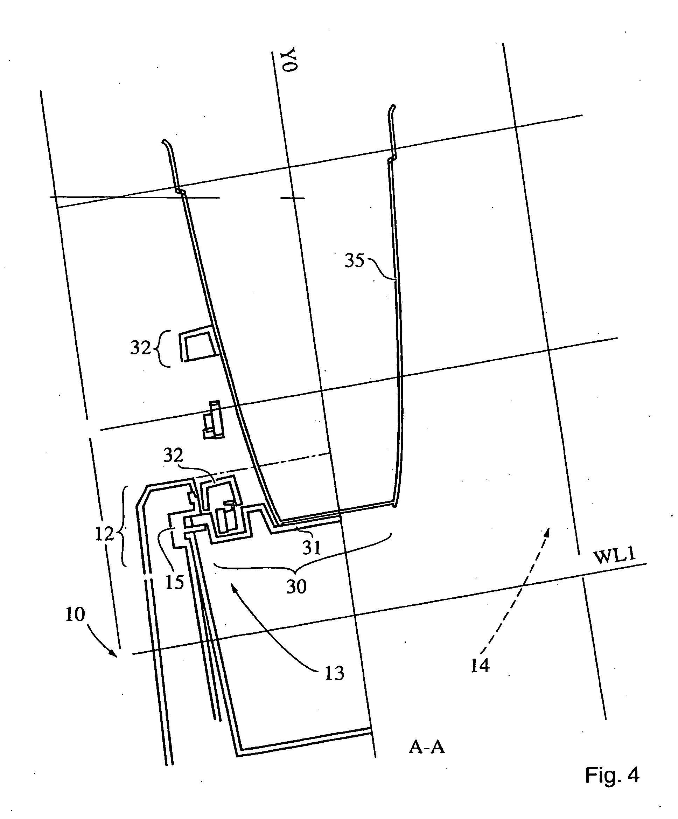

In **Figur 4** ist entlang der Schnittlinie AA aus der **Figur 3** ein Querschnitt zumindest einer Seite der Fahrzeugkonsole 10 dargestellt. Erkennbar ist wiederum der Getränkehalter 30, welcher im oberen Randbereich 12 entlang des Führungsmittels 15 verschieblich angeordnet ist und welcher mittels einer Entfernung der Halterung 32 von dem Bodenabschnitt 31 des Getränkehalters 30 in seine ausgefahrene Stellung bzw. Position bringbar ist, so dass ein Getränkebehältnis 35 sicher in dem Getränkehalter 30 gehalten ist. Hierzu bleibt der Bodenabschnitt 31 des Getränkehalters 30 im wesentlichen ortsfest auf dem Niveau des oberen Randbereichs 12 bzw, des Führungsmittels 15. In **Figur 4** ist lediglich die Anbringung des Getränkehalters 30 auf der einen Seite 13 der Fahrzeugkonsole 10 dargestellt. Auf der anderen Seite 14 ist die Anbindung des Getränkehalters 30 an den oberen Randbereich 12 der Fahrzeugkonsole 10 jedoch in gleicher Weise gehalten.

In **Figur 5** ist eine schematische Darstellung der Verhältnisse in einem viersitzigen Fahrzeug angegeben, wobei die Fahrzeugkonsole 10 als Mittelkonsole 10 vorgesehen ist und wobei die Armlehnenvorrichtung 40 zum einen als Armlehne für die Vordersitze 8 des Fahrzeugs 7 vorgesehen sein kann und wobei in Fahrzeugslängsrichtung 9 hinter den Vordersitzen 8 angeordnete weitere Sitze 8' einen Zugang zu dem Getränkehalter 30 habe können, sofern dieser in seiner hinteren Position eingestellt ist.

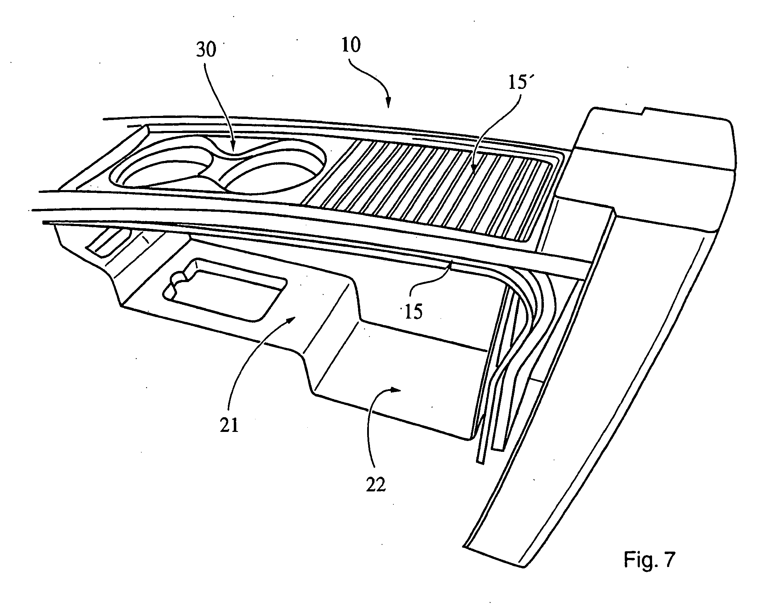

In den **Figuren 6** **und** **7** sind perspektivische Darstellungen der Fahrzeugkonsole 10 mit Getränkehalter 30 abgebildet, wobei der seitliche Teil der Fahrzeugkonsole 10 zur Besseren Darstellung der Stauraumabschnitte 21, 22 aufgeschnitten dargestellt ist. In Figur 6 ist der Getränkehalter 30 in seiner ausgefahrenen Position dargestellt, wobei in den Ausnehmungen 34 der Halterung 32 Getränkebehältnisse 35 aufgenommen sind. In Figur 7 ist der Getränkehalter 30 in seiner eingefahrenen Position dargestellt. Im Gegensatz zu den Darstellungen in den **Figuren 1** **und** **3** weist die in den **Figuren 6** **und** **7** dargestellte Fahrzeugkonsole 10 keine Armlehnenvorrichtung 40 auf. Bei der in den Figuren 6 und 7 dargestellten Fahrzeugkonsole 10 ist in dem Führungsmittel 15 eine Abdeckung 15' der Stauraumabschnitte 21, 22 der Fahrzeugkonsole 10 verschieblich angeordnet. Die Abdeckung 15' ist erfindungsgemäß insbesondere als Jalousie 15' ausgebildet. Das Führungsmittel 15 wird erfindungsgemäß bevorzugt sowohl zur Führung des verschieblichen Getränkehalters 30 als auch zur Führung der Abdeckung 15' bzw. der Jalousie 15' verwendet.

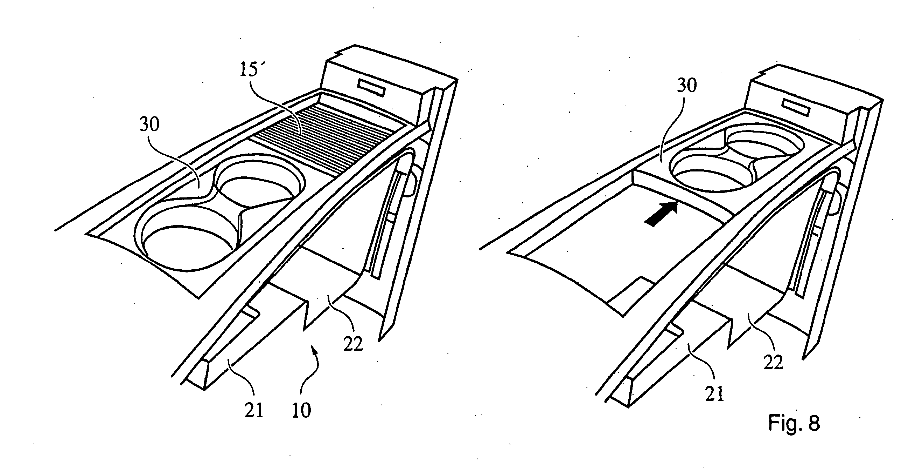

In **Figur 8** sind zwei weitere perspektivische Darstellungen der Fahrzeugkonsole 10 abgebildet, wobei im linken Teil der **Figur 8** der Getränkehalter 30 in seiner vorderen, den ersten Stauraumabschnitt 21 abdeckenden Position angeordnet ist und wobei im rechten Teil der **Figur 8** der Getränkehalter 30 in seiner hinteren, den ersten Stauraumabschnitt 21 freigebenden und den zweiten Stauraumabschnitt 22 abdeckenden Position angeordnet ist. Es ist wegen der gemeinsamen Benutzung des Führungsmittels 15 sowohl für den Getränkehalter 30 als auch für die Abdeckung 15' klar, dass bei einer hinteren Einstellung des Getränkehalters (Figur 8, rechter Teil) die Abdeckung 15' im wesentlichen vollständig in einen hinteren unteren Teil des Führungsmittels 15 verschoben und für einen Benutzer der Fahrzeugkonsole 10 nicht mehr sichtbar ist. In den **Figuren 6****,** **7** **und** **8** ist jeweils der Getränkehalter 30 im wesentlichen zusammenhängend bzw. angrenzend an die Abdeckung 15' dargestellt, so dass bei einer Bewegung des Getränkehalters 30 auch die Abdeckung 15' verschoben wird und umgekehrt. Jedoch muss dieser Zusammenhang erfindungsgemäß nicht zwingend vorgesehen sein, d.h. es kann auch beispielsweise der Getränkehalter 30 in seine vordere Position und die Abdeckung 15' bzw. Jalousie 15' in ihre hintere untere (versenkte) Position geschoben sein, so dass beispielsweise ein bequemer Zugang zu dem zweiten Stauraumabschnitt 22 für einen Benutzer möglich ist.

### Bezugszeichenliste

- 7: Fahrzeug
- 8: Vordersitze
- 9: Fahrzeuglängsrichtung
- 10: Fahrzeugkonsole
- 11: Längsrichtung
- 12: Oberer Randbereich
- 13, 14: Seiten des oberen Randbereichs
- 15: Führungsmittel
- 15': Abdeckung/Jalousie
- 21: erster Stauraumabschnitt
- 22: zweiter Stauraumabschnitt
- 30: Getränkehalter
- 31: Bodenabschnitt
- 32: Halterung
- 33: Richtung der Öffnungsbewegung des Getränkehalters
- 34: Ausnehmung in der Halterung
- 35: Getränkebehältnis
- 40: Armlehnenvonichtung
- 41: Erste Position
- 42: Zweite Position

## Patentansprüche

1. Fahrzeugkonsole (10) mit einem sich in Längsrichtung (11) der Fahrzeugkonsole (10) erstreckenden beidseitig vorgesehenen oberen Randbereich (12), wobei ein Getränkehalter (30) im oberen Randbereich (12) beidseitig (13, 14) fixiert in Längsrichtung (11) der Fahrzeugkonsole (10) verschieblich angeordnet ist, wobei die Fahrzeugkonsole (10) einen unterhalb des Getränkehalters (30) vorgesehenen Stauraumabschnitt (21, 22) aufweist, und der Getränkehatter (30) mittels eines Führunsmittels (15) im oberen Randbereich (12) längsbeweglich angeordnet ist, wobei in dem Führungsmittel (15) eine Abdeckung (15') des Stauraumabschnitts (21, 22) längsverschieblich vorgesehen ist, **dadurch gekennzeichnet, dass** die Abdeckung (15') unabhängig von dem Getränkehalter (30) längsverschieblich vorgesehen ist.

2. Fahrzeugkonsole (10) nach Anspruch 1, **dadurch gekennzeichnet, dass** der Getränkehalter (30) fest mit dem oberen Randbereich (12) der Fahrzeugkonsole (10) verbunden vorgesehen ist.

3. Fahrzeugkonsole (10) nach einem der vorhergehenden Ansprüche, **dadurch gekennzeichnet, dass** das Führungsmittel (15) eine Führungsschiene ist.

4. Fahrzeugkonsole (10), insbesondere nach einem der vorhergehenden Ansprüche, **dadurch gekennzeichnet, dass** der Getränkehalter (30) eine Halterung (32) aufweist, wobei die Halterung (32) aus der Ebene des oberen Randbereichs (12) nach oben hin ausstellbar vorgesehen ist.

5. Fahrzeugkonsole (10) nach einem der vorhergehenden Ansprüche, **dadurch gekennzeichnet, dass** die Fahrzeugkonsole (10) zur Anordnung zwischen Vordersitzen (8) eines Fahrzeugs (7) vorgesehen ist und dass der Getränkehalter (30) in seiner in Längsrichtung (11) der Fahrzeugkonsole (10) hintersten Position auch von auf hinter den Vordersitzen (8) des Fahrzeugs (7) sitzenden Insassen erreichbar ist.

6. Fahrzeugkonsole (10) nach einem der vorhergehenden Ansprüche, **dadurch gekennzeichnet, dass** die Fahrzeugkonsole (10) eine Fahrzeugmittelkonsole (10) ist.

7. Fahrzeugkonsole (10) nach einem der vorhergehenden Ansprüche, **dadurch gekennzeichnet, dass** die Fahrzeugkonsole (10) eine Armlehnenvomichtung (40) in Längsrichtung (11) im hinteren Bereich der Fahrzeugkonsole (10) aufweist.

8. Fahrzeugkonsole (10) nach einem der vorhergehenden Ansprüche, **dadurch gekennzeichnet, dass** die Längsrichtung (11) der Fahrzeugkonsole (10) im wesentlicheri einer Fahrzeuglängsrichtung (9) entspricht.

9. Fahrzeugkonsole (10) nach Anspruch 7, **dadurch gekennzeichnet, dass** die Armlehnenvorrichtung (40) in einer ersten Position (41) als Armlehne für die Vordersitzes (8) des Fahrzeugs (7) verwendbar vorgesehen ist und wobei die Armtehnenvorrichtung (40) in einer zweiten Position (42) als Komforteinrichtung, insbesondere als Tisch, für die auf hinter den Vordersitzen (8) des Fahrzeugs (7) sitzenden Insassen verwendbar vorgesehen ist.

## Claims

1. Vehicle console (10) with an upper border region (12) which extends in the longitudinal direction (11) of the vehicle console (10) and is provided on both sides, wherein a beverage holder (30), fixed on both sides (13, 14) in the upper border region (12), is arranged such that it can slide in the longitudinal direction (11) of the vehicle console (10), wherein the vehicle console (10) has a storage compartment section (21, 22) provided below the beverage holder (30), and the beverage holder (30) is arranged in a longitudinally movable manner in the upper border region (12) by means of a guide means (15), and wherein a cover (15') of the storage compartment section (21, 22) is provided in a manner such that it can be slid longitudinally in the guide means (15), **characterized in that** the cover (15') is provided in a manner such that it can be slid longitudinally independently of the beverage holder (30).

2. Vehicle console (10) according to Claim 1,
**characterized in that** the beverage holder (30) is provided in a manner connected fixedly to the upper border region (12) of the vehicle console (10).

3. Vehicle console (10) according to one of the preceding claims, **characterized in that** the guide means (15) is a guide rail.

4. Vehicle console (10), in particular according to one of the preceding claims, **characterized in that** the beverage holder (30) has a mount (32), the mount (32) being provided in a manner such that it can be deployed upwards out of the plane of the upper border region (12).

5. Vehicle console (10) according to one of the preceding claims, **characterized in that** the vehicle console (10) is provided for arrangement between front seats (8) of a vehicle (7), and **in that**, in its rearmost position in the longitudinal direction (11) of the vehicle console (10), the beverage holder (30) can also be reached by occupants sitting behind the front seats (8) of the vehicle (7).

6. Vehicle console (10) according to one of the preceding claims, **characterized in that** the vehicle console (10) is a vehicle central console (10).

7. Vehicle console (10) according to one of the preceding claims, **characterized in that** the vehicle console (10) has an armrest device (40) in the rear region of the vehicle console (10) in the longitudinal direction (11).

8. Vehicle console (10) according to one of the preceding claims, **characterized in that** the longitudinal direction (11) of the vehicle console (10) essentially corresponds to a longitudinal direction (9) of the vehicle.

9. Vehicle console (10) according to Claim 7,
**characterized in that** the armrest device (40) is provided such that it can be used in a first position (41) as an armrest for the front seats (8) of the vehicle (7), and the armrest device (40) being provided in a second position (42) such that it can be used as a comfort device, in particular as a table, for the occupants sitting behind the front seats (8) of the vehicle (7).

## Revendications

1. Console de véhicule (10) avec une région de bord supérieure (12) prévue de chaque côté et s'étendant dans la direction longitudinale (11) de la console de véhicule (10), un porte-boisson (30) fixé de chaque côté (13, 14) dans la région de bord supérieure (12) étant disposé de manière déplaçable dans la direction longitudinale (11) de la console de véhicule (10), la console de véhicule (10) présentant une portion de compartiment de rangement (21, 22) prévue sous le porte-boisson (30), et le porte-boisson (30) étant disposé de manière déplaçable en longueur à l'aide d'un moyen de guidage (15) dans la région de bord supérieure (12), un recouvrement (15') de la portion de compartiment de rangement (21, 22) étant prévu de manière déplaçable en longueur dans le moyen de guidage (15), **caractérisée en ce que** le recouvrement (15') est prévu de manière déplaçable en longueur indépendamment du porte-boisson (30).

2. Console de véhicule (10) selon la revendication 1,
**caractérisée en ce que** le porte-boisson (30) est connecté fixement à la région de bord supérieure (12) de la console de véhicule (10).

3. Console de véhicule (10) selon l'une quelconque des revendications précédentes, **caractérisée en ce que** le moyen de guidage (15) est un rail de guidage.

4. Console de véhicule (10), en particulier selon l'une quelconque des revendications précédentes,
**caractérisée en ce que** le porte-boisson (30) présente une fixation (32), la fixation (32) étant prévue de manière à pouvoir être exposée vers le haut hors du plan de la région de bord supérieure (12).

5. Console de véhicule (10) selon l'une quelconque des revendications précédentes, **caractérisée en ce que** la console de véhicule (10) est prévue pour être disposée entre des sièges avant (8) d'un véhicule (7) et **en ce que** le porte-boisson (30), dans sa position la plus en arrière dans la direction longitudinale (11) de la console de véhicule (10) peut aussi être atteint par des passagers assis derrière les sièges avant (8) du véhicule (7).

6. Console de véhicule (10) selon l'une quelconque des revendications précédentes, **caractérisée en ce que** la console de véhicule (10) est une console centrale de véhicule (10).

7. Console de véhicule (10) selon l'une quelconque des revendications précédentes, **caractérisée en ce que** la console de véhicule (10) présente un dispositif d'accoudoir (40) dans la direction longitudinale (11) dans la région arrière de la console de véhicule (10).

8. Console de véhicule (10) selon l'une quelconque des revendications précédentes, **caractérisée en ce que** la direction longitudinale (11) de la console de véhicule (10) correspond essentiellement à une direction longitudinale du véhicule (9).

9. Console de véhicule (10) selon la revendication 7,
**caractérisée en ce que** le dispositif d'accoudoir (40) peut être utilisé dans une première position (41) en tant qu'accoudoir pour le siège avant (8) du véhicule (7), et le dispositif d'accoudoir (40) peut être utilisé, dans une deuxième position (42), en tant que dispositif de confort, notamment en tant que table, pour les occupants assis derrière les sièges avant (8) du véhicule (7).
